# EUROPEAN PATENT SPECIFICATION

(11) **EP 1 112 987 B1**
(45) Date of publication and mention of the grant of the patent: **17.03.2010**
(21) Application number: 00310395.9
(22) Date of filing: 23.11.2000
(51) Int. Cl.: C04B 28/14, E04C 2/04

(54) **Gypsum wallboard**
Gipsplatte
Panneau de plâtre

(30) Priority: 16.12.1999 US 464174
(43) Date of publication of application: 04.07.2001
(73) Proprietor: OMNOVA SOLUTIONS INC., Fairlawn, Ohio 44333-3300 (US)
(72) Inventor: Westerman, Ira John, Wadsworth, Ohio 44281 (US); Hardy, Paul A., Wadsworth, Ohio 44281 (US); Zorska, Roman, University Heights, Ohio 44118 (US)
(74) Representative: Stoner, Gerard Patrick

(56) References cited:
- EP-A- 0 924 241
- EP-A- 1 024 154
- WO-A-97/45378
- DE-A- 19 853 450
- US-A- 5 688 844
- DATABASE WPI Section Ch, Week 198410 Derwent Publications Ltd., London, GB; Class A93, AN 1984-059810 XP002164469 & JP 59 018144 A (ABE K), 30 January 1984 (1984-01-30)

## Description

### Field

The present invention relates to improved gypsum wallboard and to materials and processes for making such products.

### Background

Gypsum wallboard is conventionally made by depositing an aqueous slurry of calcined gypsum ("gypsum slurry") between large sheets of paper or other material and allowing the slurry to dry. Calcined gypsum is composed of calcium sulfate hemihydrate (CaSO₄·½H₂O) which rehydrates to gypsum (CaSO₄·2H₂O) during the drying process. See Kirk Othmer, Encyclopedia of Chemical Technology, Second edition, 1970, Vol. 21, Pages 621-624, the disclosure of which is also incorporated herein by reference.

In order to achieve sufficient strength, traditional, commercial wallboard has been made with a density of about 1700 pounds (∼772 kg.) per thousand square feet of ½ inch thick board (93 m³ of 12.7 mm thick board). Although it would be desirable to reduce this density and hence overall board weight, previous attempts have met with limited success, primarily due to loss of strength.

US Patent No. 5,879,825 to Burke et al., describes an approach for reducing gypsum wallboard density without sacrificing strength by including in the gypsum core an acrylic latex having a particular combination of properties. Acrylic latexes are expensive, and therefore commercially unattractive. Therefore, it is desirable to develop an alternate and less expensive approach to accomplishing this objective.

In accordance with the present invention, it has been discovered that certain styrene butadiene latexes, modified to be substantially stable against divalent ions, can also reduce gypsum wallboard density without sacrificing strength. Because these latexes are generally less expensive to manufacture than acrylic latexes, it has also been found that commercial use of these latexes is feasible.

EP-A-1133455 (corresponding to WO-A-00/30991) describes vinylaromatic-1,3-diene copolymers in the form of aqueous dispersions stabilised with protective colloids. Preferred dienes include 1,3-butadiene and isoprene. Styrene is the preferred vinylaromatic. There is also the possibility to include "auxiliary monomers" at from 0.05 to 10% by weight based on the total weight of the monomer mixture. Examples of the auxiliary monomers include, among others, 2-acrylamido-2-methyl propanesulfonic acid. One preferred combination is a copolymer of styrene and 1,3-butadiene without further comonomers.

One aspect of the present invention is a composition for making gypsum products, comprising
- water;
- calcium sulfate hemihydrate;
- a styrene butadiene polymer latex substantially stable against divalent ions in which the styrene butadiene polymer includes at least 0.25 wt% of 2-acrylamido-2-methyl propanesulfonic acid salt as ionic monomer.

Another aspect is a gypsum wallboard panel comprising first and second cover sheets and a core disposed between the cover sheets, the core being formed from gypsum and a styrene butadiene polymer, the styrene butadiene polymer including at least 0.25 wt.% of the ionic monomer 2-acrylamido-2-methyl propanesulfonic acid salt and being derived from a styrene butadiene polymer latex substantially stable against divalent ions.

Another aspect is a method for making gypsum wallboard comprising
depositing an aqueous slurry of calcium sulfate hemihydrate and a styrene butadiene polymer latex substantially stable against divalent ions onto a cover sheet, the styrene butadiene polymer in the latex including at least 0.25 wt.% of 2-acrylamido-2-methyl propanesulfonic acid salt as ionic monomer, and allowing the slurry to substantially dry thereby forming the wallboard.

Another aspect is a gypsum wallboard panel formed by depositing a gypsum slurry between first and second cover sheets and allowing the gypsum slurry to dry, the gypsum slurry comprising
(1) water,
(2) at least 50 wt.% calcium sulfate hemihydrate based on the weight of the slurry, and
(3) a styrene butadiene polymer latex substantially stable to divalent ions and being prepared by aqueous emulsion polymerisation of styrene and butadiene in the presence of a seed polymer of copolymerised styrene and 2-acrylamido-2-methyl propanesulfonic acid salt, the amount of styrene butadiene polymer in the slurry being 0.25 to 5 wt.% based on the weight of the calcium sulfate hemihydrate in the slurry.

Another aspect is a composition comprising gypsum and an aqueous styrene butadiene polymer latex substantially stable against divalent ions, the latex being prepared by aqueous emulsion polymerisation of a monomeric mixture comprising styrene and butadiene in the presence of a seed polymer prepared by aqueous emulsion polymerisation of styrene and a salt of 2-acrylamido-2-methylpropanesulfonic acid in which the styrene butadiene polymer includes at least 0.25 wt.% of 2-acrylamido-2-methylpropanesulfonic acid salt ionic monomer.

In accordance with the present invention, gypsum wallboard can be made lighter in weight without sacrificing strength by including in the gypsum slurry used to make the board a styrene butadiene polymer latex substantially stable against divalent ions in which the styrene butadiene polymer includes at least 0.25 wt.% of the ionic monomer.

The styrene butadiene latexes used in accordance with the present invention are substantially stable against divalent ions. By "substantially stable against divalent ions" is meant that a latex will exhibit no significant coagulation or flocculation when 10 ml (milliliters) of a 2 wt.% calcium chloride aqueous solution is slowly added to 50 ml of the latex. By slowly added is meant that the calcium chloride solution is added to 50 ml of the latex with stirring over a period of time between 5 and 30 seconds.

The amount of styrene and butadiene in the polymers of these latexes can vary widely. For example, these polymers may contain 4 to 60 wt.% butadiene, more normally 7 to 40 wt.% butadiene and especially 10 to 30 wt.% butadiene. In addition, they may contain 20 to 95 wt.% styrene, more normally 45 to 90 wt.% styrene and especially 65 to 85 wt.% styrene. Moreover, in these polymers, the ratio of styrene to butadiene is typically in the range of 10/1 to 1/1, more usually 7/1 to 1.5/1, and even more typically 6/1 to 2/1.

In addition to styrene and butadiene, the styrene butadiene polymers of the present invention also include an ionic monomer. By "ionic monomer" is meant a monomer which addition polymerizes to form a homopolymer which is water soluble when having a molecular weight of 5000. In other words, if a 5000 molecular weight homopolymer formed by addition polymerizing a monomer is water soluble, that monomer is "ionic" in the context of this invention. The ionic monomer is 2-acrylamido-2-methyl propanesulfonic acid salt. The cations of these salts are normally sodium, potassium or ammonium, more typically sodium or potassium. Sodium 2-acrylamido-2-methyl propanesulfonic acid salt is especially preferred. 2-acrylamido-2-methyl propanesulfonic acid is known in industry as "AMPS," which is a trademark of The Lubrizol Company.

The amount of ionic monomer in the styrene butadiene polymers of the invention can vary widely. As little as about 0.25 wt.% to as much as about 20 wt.%, based on the weight of the polymer, are effective. Topically, the polymers will contain about 0.5 to 10, more often about 1 to 5 wt.%, ionic monomer based on the weight of the polymer.

In addition to styrene, butadiene and the ionic monomer, the polymers of the invention may also include 0.25 to 20 wt.% of hydroxyethyl acrylate, hydroxyethyl methacrylate, acrylonitrile, methacrylonitrile, acrylamide and/or methacrylamide. These "hydrophilic adjunct comonomers" have been found to enhance the effect of the ionic monomers in that the overall stability against divalent ions exhibited by a polymer including an ionic monomer as well as a hydrophilic adjunct comonomer is greater than would have been predicted by the rule of mixtures. A hydrophilic adjunct comonomer content of 0.5 to 10 wt.%, or even 1 to 4 wt.%, is more typical.

In addition to the foregoing monomers, the styrene butadiene polymers of the present invention may also include other addition monomers. Examples are isoprene, chloroprene, alpha-methylstyrene, 4-methylstyrene, 4-tert-butylstyrene, 4-ethylstyrene, divinylbenzene, vinylidene chloride, 2-vinylpyridene, 4-vinylpyridene and especially acrylic acid, methacrylic acid and their derivatives such as metal and ammonium salts, substituted and unsubstituted amides (other than acrylamide which is an hydrophilic adjunct comonomer), nitriles, and C₁ to C₁₂ esters. In such cases, the polymer should contain no more than about 30 wt.%, more typically no more than 15 wt.%, other addition monomer.

Styrene butadiene polymer latexes are typically made by aqueous emulsion polymerization. In carrying out such processes, the monomers forming the polymer are emulsified in water using suitable surfactants, usually anionic or non-ionic. Other ingredients such as free-radical initiators, chelating agents, chain transfer agents, biocides, defoamers and antioxidants can also be added. Once the free-radical initiator is activated, the monomers polymerize together producing the product polymer. As is well known, the arrangement of multiple monomers in a product polymer can be determined, at least to some degree, by controlling the manner which the monomers are added to the system. If all the monomers are added at the same time, the product polymer will have a more random distribution of monomers. If added in stages, the polymer will have a more ordered distribution of monomers.

A typical polymer latex produced by emulsion polymerization contains enough surfactants and other ingredients to prevent the product polymer from separating out from the water phase upon standing. However, these surfactants and other ingredients are usually insufficient to prevent coagulation or flocculation of the polymer if the latex is contaminated with significant amounts of divalent or trivalent ions. Therefore, such latexes can be expected to coagulate or flocculate prematurely if contacted with gypsum slurries used in the manufacture of gypsum wallboard, since such slurries contain significant concentrations of calcium ions, which are divalent.

In order to avoid this problem, additional surfactants can be incorporated into the latexes to keep them stable against calcium ions. However, gypsum slurries already contain significant concentrations of particular types of surfactants and other ingredients to enable the slurries to be frothed (foamed) during manufacture. Accordingly, it is desirable to avoid adding still additional surfactants to these systems, since different surfactant packages can interact with one another and thereby become ineffective.

In accordance with the present invention, therefore, the styrene butadiene latex includes a significant amount of a monomer, the ionic monomer, which imparts its own surface active properties to the polymer. As a result, additional surfactants for imparting calcium ion stability to a latex of the polymer can be reduced or even eliminated entirely. Therefore, when such latexes are added to gypsum slurries in the manufacture of gypsum wallboard, problems occurring from mixing incompatible surfactant packages can be avoided.

Styrene butadiene latexes which are especially useful in accordance with the present invention are described in our US application Serial No. 09/237,512, filed January 26, 1999 (corresponding to EP-A-1 024 154 and US 6184287). In general, these latexes are formed by emulsion polymerization of styrene and butadiene in the presence of an in situ seed polymer composed of polymerized styrene and an AMPS salt, preferably Na-AMPS. Normally, the seed polymer is made by emulsion polymerization of styrene and Na-AMPS only, although butadiene may be included as an additional comonomer if desired. These latexes have been designed for mixing with cement used for cementing oil wells and are particularly stable against divalent ions. The conditions encountered in gypsum slurries are less severe than those in oil well cementing, and so less ionic monomer may be acceptable when these polymers are used in the present invention as compared to oil well cementing applications.

Styrene butadiene latexes of particular utility in accordance with the present invention are formed by emulsion polymerizing the monomers identified in the following Table 1 in accordance with the general procedure described in the above-noted EP-A-1 024 154:

**TABLE 1**

| **Components of Styrene Butadiene Polymers, wt.%** | | | | | | |
|---|---|---|---|---|---|---|
| Example | NaAMPS | Styrene | Butadiene | HEA¹ | Acrylo² | Results |
| 1 | 2.5 | 77.5 | 15 | 3 | | |
| 2 | 2.5 | 67.5 | 15 | 3 | 10 | |
| 3 | 5.5 | 67.2 | 26 | 1.3 | | |

| | | | | | | |
|---|---|---|---|---|---|---|
| 1. Hydroxyethyl acrylate 2. Acrylonitrile | | | | | | |

The amount of styrene butadiene latex that should be incorporated into a gypsum slurry in accordance with the present invention can vary widely, and essentially any amount can be used. From a practical standpoint, the amount of latex should be enough so that a noticeable decrease in density of product gypsum wallboard can be achieved without sacrificing strength but not so much that the product wallboard product becomes economically unattractive. In general, this means that the amount of latex added should be enough so that the styrene butadiene polymer is present in the product composition is about 0.1 to 10 wt.%, based on the weight of calcium sulfate hemihydrate in the composition. More typically, the amount of styrene butadiene polymer in the composition is 0.25 to 5 wt.%, and especially 0.5 to 1.5 wt.%, based on the weight of calcium sulfate hemihydrate in the composition.

Gypsum slurries for manufacture of wallboard typically contain various additional ingredients, as well known to those skilled in the art. Examples of such ingredients are accelerators, starch , retarders, paper pulp and so forth. See the above-noted Burke et al. patent, US Patent No. 5,879,825, especially Table I. Such components can also be included in the compositions produced in accordance with the present invention.

The gypsum-containing compositions of the present invention are used in the same way as conventional gypsum slurries to manufacture gypsum wallboard product. That is, they are deposited between large sheets of paper or other material and allowed to dry whereby the calcium sulfate hemihydrate in the system rehydrates into the dihydrate, i.e. gypsum, thereby forming the completed wallboard product. In commercial practice, the process is carried out in high volume using machines having traveling webs which rapidly move the incipiently-formed product through ovens under precisely controlled heating conditions for removing exactly the right amount of water. In this environment, it is desirable that the amount of water in the starting gypsum slurry be controlled so that the wallboard product is dried to the right amount when it leaves the oven.

To this end, conventional gypsum slurries for making wallboard typically contain about 40 to 60 wt.%, more typically about 48 to 55 wt.% calcium sulfate hemihydrate and less than 60 wt.%, more typically less than 50 wt.% water, based on the weight of the composition. See Table I of the above-noted Burke et. al. patent. The gypsum slurries of the present invention may also contain the same amounts of calcium sulfate hemihydrate and water, especially when intended for use in making gypsum wallboard in modem high speed equipment.

In this connection, it should be appreciated that the amount of water which a styrene butadiene styrene butadiene latex adds to a gypsum slurry in accordance with the present invention is essentially trivial when making wallboard product under normal practice. This is because the amount of latex added will typically be small, e.g. 5 wt.% or less, and the amount of water in this latex will usually be less than 50 wt.%. Also, less gypsum slurry is needed to make a wallboard product of a given dimension, since its density is less, and hence less water derived from the gypsum slurry is present in the inventive gypsum slurries in the first place. This means that the net effect of including a styrene butadiene latex in a gypsum slurry in accordance with the present invention may actually be to reduce the overall water content of the slurry by a slight amount for a wallboard product of a given dimension. In any event, those skilled in the art can readily determine by routine experimentation the precise amount of calcium sulfate hemihydrate and water to include in a particular embodiment of the inventive gypsum slurries in order that it can be used without problem in making gypsum wallboard in modern high speed equipment.

It should also be appreciated that the gypsum slurries of the present invention can be used in applications other than in making gypsum wallboard. For example, the inventive gypsum slurries can also be used in making molding plasters. In these applications, more or less water than indicated above can be included in the composition depending on the particular application desired. Indeed, the only real upper limit on the water content of the inventive gypsum slurry is that too much water may make its viscosity too low for practical application or may cause water to separate out. Similarly, the only real lower limit on the water content is stoichiometric - that is, enough water should be present to allow substantially complete hydration of the calcium sulfate hemihydrate to the dihydrate form. Within these broad limits, those skilled in the art can readily determine by routine experimentation the precise amount of water to use in a particular application.

## Claims

1. A composition for making gypsum products, comprising
- water;
- calcium sulfate hemihydrate;
- a styrene butadiene polymer latex substantially stable against divalent ions in which the styrene butadiene polymer includes at least 0.25 wt% of 2-acrylamido-2-methyl propanesulfonic acid salt as ionic monomer.

2. A composition according to claim 1, suitable for making gypsum wallboard.

3. A composition according to claim 1 which contains paper pulp.

4. A composition according to claim 1 which contains a foaming agent.

5. A composition according to any one of the preceding claims wherein the polymer latex is one prepared by aqueous emulsion polymerisation of a monomeric mixture comprising styrene and butadiene in the presence of a seed polymer prepared by aqueous emulsion polymerisation of styrene and said salt of 2-acrylamido-2-methyl propanesulfonic acid.

6. A composition according to any one of the preceding claims, wherein the styrene butadiene polymer further contains a hydrophilic adjunct comonomer selected from hydroxyethyl acrylate, hydroxyethyl methacrylate, acrylonitrile, methacrylonitril, acrylamide and methacrylamide.

7. A composition according to any one of the preceding claims, wherein the styrene butadiene polymer contains 4 to 60 wt.% butadiene, 20 to 95 wt.% styrene, 1 to 20 wt.% ionic monomer and further wherein the styrene/butadiene weight ratio in the polymer is from 10/1 to 1/1.

8. A composition according to claim 7, wherein the styrene butadiene polymer contains 7 to 40 wt.% butadiene, 45 to 90 wt.% styrene and 2 to 10 wt.% ionic monomer and further wherein the styrene/butadiene weight ratio in the polymer is from 7/1 to 1.5/1.

9. A composition according to claim 8, wherein the styrene/butadiene polymer contains from 1 to 5 wt.% of the 2-acrylamido-2-methyl propane sulfonic acid salt.

10. A composition according to claim 9, wherein the styrene butadiene polymer contains 10 to 30 wt.% butadiene, 70 to 85 wt.% styrene and 3 to 7 wt.% ionic monomer and further wherein the styrene/butadiene weight ratio in the polymer 6/1 to 2/1.

11. A composition according to any one of the preceding claims, wherein the amount of styrene butadiene polymer in the composition is from 0.1 to 10 wt.%, based on the weight of calcium sulfate hemihydrate in the composition.

12. A composition according to claim 11, wherein the amount of styrene butadiene polymer in the composition is from 0.25 to 5 wt.%, based on the weight of calcium sulfate hemihydrate in the composition.

13. A composition according to claim 12, wherein the amount of styrene butadiene polymer in the composition is from 0.5 to 1.5 wt.%, based on the weight of calcium sulfate hemihydrate in the composition.

14. A composition according to any one of the preceding claims, containing from 40 to 60 wt.% of calcium sulfate hemihydrate.

15. A composition according to claim 11, wherein the composition contains at least 50 wt.% calcium sulfate hemihydrate, based on the weight of the composition.

16. A gypsum wallboard panel comprising first and second cover sheets and a core disposed between the cover sheets, the core being formed from gypsum and a styrene butadiene polymer, the styrene butadiene polymer including at least 0.25 wt.% of the ionic monomer 2-acrylamido-2-methyl propanesulfonic acid salt and being derived from a styrene butadiene polymer latex substantially stable against divalent ions.

17. A wallboard according to claim 16, wherein said polymer is one prepared by aqueous emulsion polymerisation of a monomeric mixture comprising styrene and butadiene in the presence of a seed polymer prepared by aqueous emulsion polymerisation of styrene and the salt of 2-acrylamido-2-methyl propanesulfonic acid.

18. A wallboard according to any one of claims 16 or 17, wherein the amount of styrene butadiene polymer in the core is 0.25 to 10 wt.%, based on the weight of calcium sulfate in the core, measured as calcium sulfate hemihydrate.

19. A method for making gypsum wallboard comprising depositing an aqueous slurry of calcium sulfate hemihydrate and a styrene butadiene polymer latex substantially stable against divalent ions onto a cover sheet, the styrene butadiene polymer in the latex including at least 0.25 wt.% of 2-acrylamido-2-methyl propanesulfonic acid salt as ionic monomer, and allowing the slurry to substantially dry thereby forming the wallboard.

20. A gypsum wallboard panel formed by depositing a gypsum slurry between first and second cover sheets and allowing the gypsum slurry to dry, the gypsum slurry comprising
(1) water,
(2) at least 50 wt.% calcium sulfate hemihydrate based on the weight of the slurry, and
(3) a styrene butadiene polymer latex substantially stable to divalent ions and being prepared by aqueous emulsion polymerisation of styrene and butadiene in the presence of a seed polymer of copolymerised styrene and 2-acrylamido-2-methyl propanesulfonic acid salt, the amount of styrene butadiene polymer in the slurry being 0.25 to 5 wt.% based on the weight of the calcium sulfate hemihydrate in the slurry.

21. A composition comprising gypsum and an aqueous styrene butadiene polymer latex substantially stable against divalent ions, the latex being prepared by aqueous emulsion polymerisation of a monomeric mixture comprising styrene and butadiene in the presence of a seed polymer prepared by aqueous emulsion polymerisation of styrene and a salt of 2-acrylamido-2-methylpropanesulfonic acid in which the styrene butadiene polymer includes at least 0.25 wt.% of 2-acrylamido-2-methylpropanesulfonic acid salt ionic monomer.

## Patentansprüche

1. Zusammensetzung zur Herstellung von Gipsprodukten, umfassend:
- Wasser;
- Calciumsulfathemihydrat;
- einen Styrolbutadienpolymerlatex, der gegenüber zweiwertigen Ionen im Wesentlichen stabil ist und in dem das Styrolbutadienpolymer zumindest 0,25 Gew.-% 2-Acrylamido-2-methylpropansulfonsäuresalz als ionisches Monomer umfasst.

2. Zusammensetzung nach Anspruch 1, die zur Herstellung von Gipsleichtbauplatten geeignet ist.

3. Zusammensetzung nach Anspruch 1, die Zellstoff enthält.

4. Zusammensetzung nach Anspruch 1, die einen Schaumbildner enthält.

5. Zusammensetzung nach einem der vorangegangenen Ansprüche, worin der Polymerlatex durch die wässrige Emulsionspolymerisation eines Monomergemischs, das Styrol und Butadien umfasst, in Gegenwart eines Impfpolymers hergestellt wird, das durch die wässrige Emulsionspolymerisation von Styrol und dem Salz von 2-Acrylamido-2-methylpropansulfonsäure hergestellt wird.

6. Zusammensetzung nach einem der vorangegangenen Ansprüche, worin das Styrolbutadienpolymer weiters ein aus Hydroxyethylacrylat, Hydroxyethylmethacrylat, Acrylnitril, Methacrylnitril, Acrylamid und Methacrylamid ausgewähltes hydrophiles Zusatzcomonomer enthält.

7. Zusammensetzung nach einem der vorangegangenen Ansprüche, worin das Styrolbutadienpolymer 4 bis 60 Gew.-% Butadien, 20 bis 95 Gew.-% Styrol und 1 bis 20 Gew.-% ionisches Monomer enthält und das Gewichtsverhältnis von Styrol zu Butadien in dem Polymer weiters 10:1 bis 1:1 beträgt.

8. Zusammensetzung nach Anspruch 7, worin das Styrolbutadienpolymer 7 bis 40 Gew.-% Butadien, 45 bis 90 Gew.-% Styrol und 2 bis 10 Gew.-% ionisches Monomer enthält und das Gewichtsverhältnis von Styrol zu Butadien in dem Polymer weiters 7:1 bis 1,5:1 beträgt.

9. Zusammensetzung nach Anspruch 8, worin das Styrolbutadienpolymer 1 bis 5 Gew.-% 2-Acrylamido-2-methylpropansulfonsäuresalz enthält.

10. Zusammensetzung nach Anspruch 9, worin das Styrolbutadienpolymer 10 bis 30 Gew.-% Butadien, 70 bis 85 Gew.-% Styrol und 3 bis 7 Gew.-% ionisches Monomer enthält und das Gewichtsverhältnis von Styrol zu Butadien in dem Polymer weiters 6:1 bis 2:1 beträgt.

11. Zusammensetzung nach einem der vorangegangenen Ansprüche, worin die Menge an Styrolbutadienpolymer in der Zusammensetzung bezogen auf das Gewicht von Calciumsulfathemihydrat in der Zusammensetzung 0,1 bis 10 Gew.-% beträgt.

12. Zusammensetzung nach Anspruch 11, worin die Menge an Styrolbutadienpolymer in der Zusammensetzung bezogen auf das Gewicht von Calciumsulfathemihydrat in der Zusammensetzung 0,25 bis 5 Gew.-% beträgt.

13. Zusammensetzung nach Anspruch 12, worin die Menge an Styrolbutadienpolymer in der Zusammensetzung bezogen auf das Gewicht von Calciumsulfathemihydrat in der Zusammensetzung 0,5 bis 1,5 Gew.-% beträgt.

14. Zusammensetzung nach einem der vorangegangenen Ansprüche, die 40 bis 60 Gew.-% Calciumsulfathemihydrat enthält.

15. Zusammensetzung nach Anspruch 11, worin die Zusammensetzung bezogen auf das Gewicht der Zusammensetzung zumindest 50 Gew.-% Calciumsulfathemihydrat enthält.

16. Gipsleichtbauplatte, umfassend eine erste und eine zweite Verkleidungsplatte und einen zwischen den Verkleidungsplatten angeordneten Kern, wobei der Kern aus Gips und einem Styrolbutadienpolymer ausgebildet ist, wobei das Styrolbutadienpolymer zumindest 0,25 Gew.-% des ionischen Monomers 2-Acrylamido-2-methylpropansulfonsäuresalz umfasst und von einem Styrolbutadienpolymerlatex stammt, der gegenüber zweiwertigen Ionen im Wesentlichen stabil ist.

17. Gipsleichtbauplatte nach Anspruch 16, worin das Polymer durch die wässrige Emulsionspolymerisation eines Monomergemischs, das Styrol und Butadien umfasst, in Gegenwart eines Impfpolymers hergestellt wird, das durch die wässrige Emulsionspolymerisation von Styrol und dem Salz von 2-Acrylamido-2-methylpropansulfonsäure hergestellt wird.

18. Gipsleichtbauplatte nach einem der Ansprüche 16 oder 17, worin die Menge an Styrolbutadienpolymer in dem Kern bezogen auf Gewicht von dem als Calciumsulfathemihydrat gemessenen Calciumsulfat in dem Kern 0,25 bis 10 Gew.-% beträgt.

19. Verfahren zur Herstellung einer Gipsleichtbauplatte, umfassend:
das Abscheiden einer wässrigen Aufschlämmung von Calciumsulfathemihydrat und einem Styrolbutadienpolymerlatex, der gegenüber zweiwertigen Ionen im Wesentlichen stabil ist, auf einer Verkleidungsplatte, wobei das Styrolbutadienpolymer in dem Latex zumindest 0,25 Gew.-% 2-Acrylamido-2-methylpropansulfonsäuresalz als ionisches Monomer enthält, und das Zulassen, dass die Aufschlämmung im Wesentlichen trocknet, wodurch die Leichtbauplatte ausgebildet wird.

20. Gipsleichtbauplatte, die durch das Abscheiden einer Gipsaufschlämmung zwischen einer ersten und einer zweiten Verkleidungsplatte und das Zulassen des Trocknens der Gipsaufschlämmung ausgebildet wird, wobei die Gipsaufschlämmung Folgendes umfasst:
(1) Wasser,
(2) zumindest 50 Gew.-% Calciumsulfathemihydrat bezogen auf das Gewicht der Aufschlämmung und
(3) einen Styrolbutadienpolymerlatex, der gegenüber zweiwertigen Ionen im Wesentlichen stabil ist und durch die wässrige Emulsionspolymerisation von Styrol und Butadien in Gegenwart eines Impfpolymers aus copolymerisiertem Styrol und 2-Acrylamido-2-methylpropansulfonsäuresalz hergestellt wird, wobei die Menge an Styrolbutadienpolymer in der Aufschlämmung bezogen auf das Gewicht des Calciumsulfathemihydrats in der Aufschlämmung 0,25 bis 5 Gew.-% beträgt.

21. Zusammensetzung, umfassend Gips und einen wässrigen Styrolbutadienpolymerlatex, der gegenüber zweiwertigen Ionen im Wesentlichen stabil ist, wobei der Latex durch die wässrige Emulsionspolymerisation eines Monomergemischs, das Styrol und Butadien umfasst, in Gegenwart eines Impfpolymers hergestellt wird, das durch die wässrige Emulsionspolymerisation von Styrol und dem Salz von 2-Acrylamido-2-methylpropansulfonsäure hergestellt wird, worin das Styrolbutadienpolymer zumindest 0,25 Gew.-% 2-Acrylamido-2-methylpropansulfonsäuresalz als ionisches Monomer umfasst.

## Revendications

1. Composition pour la réalisation de produits en plâtre, comprenant
- de l'eau;
- un semi-hydrate de calcium sulfate;
- un latex de polymère styrène butadiène sensiblement stable contre des ions divalents, dans laquelle le polymère styrène butadiène comporte au moins 0,25% en poids de sel d'acide 2-acrylamido-2-méthyl propanesulfonique comme monomère ionique.

2. Composition selon la revendication 1, apte à réaliser un panneau de revêtement en plâtre.

3. Composition selon la revendication 1, qui contient de la pâte de papier.

4. Composition selon la revendication 1, qui contient un agent de moussage.

5. Composition selon l'une quelconque des revendications précédentes, dans laquelle le latex de polymère est un préparé par une polymérisation d'émulsion aqueuse d'un mélange monomère comprenant du styrène et butadiène en présence d'un polymère semence préparé par une polymérisation d'émulsion aqueuse de styrène et dudit sel de l'acide 2-acrylamido-2-méthyl propanesulfonique.

6. Composition selon l'une quelconque des revendications précédentes, dans laquelle le polymère styrène butadiène contient en outre un comonomère d'adjonction hydrophile sélectionné parmi hydroxyéthyl acrylate, hydroxyéthyl méthacrylate, acrylonitrile, méthacrylonitrile, acrylamide et méthacrylamide.

7. Composition selon l'une quelconque des revendications précédentes, dans laquelle le polymère styrène butadiène contient 4 à 60% en poids de butadiène, 20 à 95% en poids de styrène, 1 à 20% en poids de monomère ionique et en outre, où le rapport pondéral styrène/butadiène dans le polymère est de 10/1 à 1/1.

8. Composition selon la revendication 7, dans laquelle le polymère styrène butadiène contient 7 à 40% en poids de butadiène, 45 à 90% en poids de styrène et 2 à 10% en poids de monomère ionique, et en outre où le rapport pondéral styrène/butadiène dans le polymère est de 7/1 à 1,5/1.

9. Composition selon la revendication 8, dans laquelle le polymère styrène/butadiène contient de 1 à 5% en poids du sel de l'acide 2-acrylamido-2-méthyl propane sulfonique.

10. Composition selon la revendication 9, dans laquelle le polymère styrène butadiène contient 10 à 30% en poids de butadiène, 70 à 85% en poids de styrène et 3 à 7% en poids de monomère ionique, et en outre où le rapport pondéral styrène/butadiène dans le polymère est de 6/1 à 2/1.

11. Composition selon l'une quelconque des revendications précédentes, dans laquelle la quantité du polymère styrène butadiène dans la composition est de 0,1 à 10% en poids, basée sur le poids du semi-hydrate de calcium sulfate dans la composition.

12. Composition selon la revendication 11, dans laquelle la quantité de polymère styrène butadiène dans la composition est de 0,25 à 5% en poids, basée sur le poids du semi-hydrate de calcium sulfate dans la composition.

13. Composition selon la revendication 12, dans laquelle la quantité de polymère styrène butadiène dans la composition est de 0,5 à 1,5% en poids, basée sur le poids du semi-hydrate de calcium sulfate dans la composition.

14. Composition selon l'une quelconque des revendications précédentes, contenant de 40 à 60% en poids du semi-hydrate de calcium sulfate.

15. Composition selon la revendication 11, où la composition contient au moins 50% en poids de semi-hydrate de calcium sulfate, basée sur le poids de la composition.

16. Panneau de revêtement en plâtre comprenant des première et deuxième feuilles de recouvrement et un noyau disposé entre les feuilles de recouvrement, le noyau étant réalisé en plâtre et un polymère styrène-butadiène, le polymère styrène-butadiène comportant au moins 0,25% en poids de monomère ionique du sel de l'acide 2-acrylamido-2-méthyl propanesulfonique et étant dérivé d'un latex de polymère styrène-butadiène sensiblement stable à l'encontre d'ions divalents.

17. Panneau de revêtement selon la revendication 16, dans lequel ledit polymère est un préparé par une polymérisation d'émulsion aqueuse d'un mélange monomère comprenant styrène et butadiène en présence d'un polymère semence préparé par polymérisation de l'émulsion aqueuse de styrène et du sel de l'acide 2-acrylamido-2-méthyl propanesulfonique.

18. Panneau de revêtement selon l'une quelconque des revendications 16 ou 17, dans lequel la quantité de polymère styrène-butadiène dans le noyau est de 0,25 à 10% en poids, basé sur le poids du calcium sulfate dans le noyau mesuré comme semi-hydrate de calcium sulfate.

19. Procédé de fabrication d'un panneau de revêtement en plâtre comprenant
déposer une boue aqueuse de semi-hydrate de calcium sulfate et d'un latex de polymère styrène-butadiène sensiblement stable à l'encontre d'ions divalents sur une feuille de recouvrement, le polymère styrène-butadiène dans le latex comportant au moins 0,25% en poids de sel de l'acide 2-acrylamido-2-méthyl-propanesulfonique comme monomère ionique, et amener la boue à sécher sensiblement en formant ainsi le panneau de revêtement.

20. Panneau de revêtement en plâtre formé en déposant une boue de plâtre entre les première et deuxième feuilles de recouvrement et amener la boue de plâtre à durcir, la boue de plâtre comprenant
(1) de l'eau,
(2) au moins 50% en poids de semi-hydrate de calcium sulfate basé sur le poids de la boue, et
(3) un latex de polymère styrène-butadiène sensiblement stable aux ions divalents et préparé par polymérisation de l'émulsion aqueuse de styrène et butadiène en présence d'un polymère semence de styrène copolymérisé et du sel de l'acide 2-acrylamido-2-méthyl propanesulfonique, la quantité de polymère styrène-butadiène dans la boue étant de 0,25 à 5% en poids basé sur le poids du semi-hydrate de calcium sulfate dans la boue.

21. Composition comprenant du plâtre et un latex de polymère aqueux styrène-butadiène sensiblement stable contre des ions divalents, le latex étant préparé par polymérisation de l'émulsion aqueuse d'un mélange monomère comprenant styrène et butadiène en présence d'un polymère semence préparé par polymérisation de l'émulsion aqueuse de styrène et d'un sel de l'acide 2-acrylamido-2-méthylpropanesulfonique, où le polymère styrène-butadiène comporte au moins 0,25% en poids de monomère ionique du sel de l'acide 2-acrylamido-2-méthylpropanesulfonique.
